(19) Europäisches Patentamt

European Patent Office

Office européen des brevets

(11) **EP 3 188 372 B1**

(12) **EUROPEAN PATENT SPECIFICATION**

(45) Date of publication and mention
of the grant of the patent:
**12.09.2018 Bulletin 2018/37**

(21) Application number: **15307183.2**

(22) Date of filing: **30.12.2015**

(51) Int Cl.:
***H04B 7/024*** *(2017.01)*

(54) **GRAPH CLUSTERING FOR COOPERATION IN TELECOMMUNICATIONS NETWORKS**

GRAPHEN-CLUSTERING FÜR ZUSAMMENARBEIT IN TELEKOMMUNIKATIONSNETZWERKEN

GROUPAGE DE GRAPHE POUR UNE COOPÉRATION DANS DES RÉSEAUX DE TÉLÉCOMMUNICATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.07.2017 Bulletin 2017/27**

(73) Proprietors:
• **Mitsubishi Electric R&D Centre Europe B.V.
1119 NS Schiphol Rijk Amsterdam (NL)**
Designated Contracting States:
**FR**
• **Mitsubishi Electric Corporation
Chiyoda-ku
Tokyo 100-8310 (JP)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventors:
• **KHANFOUCI, Mourad
35708 Rennes Cedex 7 (FR)**
• **Brunel, Loïc
35708 Rennes cedex 7 (FR)**

(74) Representative: **Cabinet Plasseraud
66, rue de la Chaussée d'Antin
75440 Paris Cedex 09 (FR)**

(56) References cited:
**US-A1- 2013 267 239**

• **BERTRAND A ET AL: "Seeing the Bigger Picture: How Nodes Can Learn Their Place Within a Complex Ad Hoc Network Topology", IEEE SIGNAL PROCESSING MAGAZINE, IEEE SERVICE CENTER, PISCATAWAY, NJ, US, vol. 30, no. 3, 1 May 2013 (2013-05-01), pages 71-82, XP011514758, ISSN: 1053-5888, DOI: 10.1109/MSP.2012.2232713**
• **DI LORENZO PAOLO ET AL: "Distributed Estimation and Control of Algebraic Connectivity Over Random Graphs", IEEE TRANSACTIONS ON SIGNAL PROCESSING, IEEE SERVICE CENTER, NEW YORK, NY, US, vol. 62, no. 21, 1 November 2014 (2014-11-01), pages 5615-5628, XP011560917, ISSN: 1053-587X, DOI: 10.1109/TSP.2014.2355778 [retrieved on 2014-10-06]**

## Description

## Background

### Technical field

The present invention relates to methods and systems for enabling cooperation between nodes in communications networks. More particularly, the invention relates to the scaling of methods of cooperation to include large numbers of nodes and dynamic sets of nodes wherein nodes may join or leave a cooperating set. More particularly still, the invention relates to such methods and systems for use in a fifth-generation (5G) telecommunication network. The invention also relates to computer programs for implementing such methods.

### Related art

Current telecommunications technologies, such as fourth generation (4G) network technologies, employ clustering techniques such as clustering for the setting of multipoint transmission (CoMP). CoMP is a set of different techniques that allow two or more base stations in a network to cooperate in the transmission of signals to user equipment (UE) (i.e. a user terminal) and/or the reception of signals from a UE. By operating the base stations in cooperation, improvements in data throughput can often be obtained.

For example, in a cellular network, whilst a signal will normally be well received by a UE located near the centre of a cell, the signal available near the edge of a cell will often be degraded both by the increased distance of the UE from the cell base station, and also by interference from one or more neighbouring cells. By configuring base stations to cooperate, they can act to provide joint scheduling and transmissions and/or provide joint processing of received signals.

Thus, on the down link side, two or more base stations can simultaneously transmit the same information to a UE to improve the received signal strength, and also use coordinated beamforming to direct signals specifically to the UE. On the uplink side, the base stations can jointly receive and process a signal from a UE to reduce the effects of interference from neighbouring cells.

A set of base stations or nodes that are employing such cooperation is termed a cooperating set. Such cooperating sets are formed via a process of "clustering". The clustering process involves defining sets of base stations that are able to coordinate their transmissions so as to allow for an improvement in the throughput of user terminals but with low, or at least manageable, increase in the signalling overhead.

The term node is used within this document to refer to any entity that participates in the provision of wireless telecommunications in the network in question. Thus, for example a node will often take the form of a traditional base station (node) that provides telecommunications for a 4G and/or 5G cellular network. However, nodes can also take the form of femtocell base stations, picocell base stations, microcell base stations, WiFi access points/routers and so forth.

The development of cooperating networks of nodes poses two distinct problems:

1. Firstly, a determination of the cooperation capabilities of the nodes together with a determination of cooperating sets of nodes with similar cooperation capabilities must be made;
2. Secondly, a determination of low overhead signalling methods for establishing fast cooperation and updating of the cooperating sets must also be achieved.

To deal with the first problem it is generally necessary to determine a network invariant for a node, in order to know with which other node or nodes of the network it should cooperate in a manner to usefully serve user terminals. Moreover it must also be determined how to create relevant cooperating sets for efficient implementation of this cooperation.

In coordinated multipoint transmission of legacy 4G communication networks (CoMP), the clustering process involves defining sets of nodes that are coordinating their transmission for improving the throughput of user terminals with low and manageable signalling overhead. These sets are called cooperating sets.

The clustering technique used in CoMP employs Reference Signal Received Power (RSRP) measurements received from the user terminals to determine the initial coarse cooperation set. Subsequently, this cooperating set is then split into K dynamic cooperating sets by solving a joint knapsack combinatory optimization problem in order to achieve the following conditions:

- Minimize the overall size of each set and maximize the number of user terminals that would benefit from CoMP performed by the cooperating set; and
- Ensure that each node is member of at least one cooperating set.

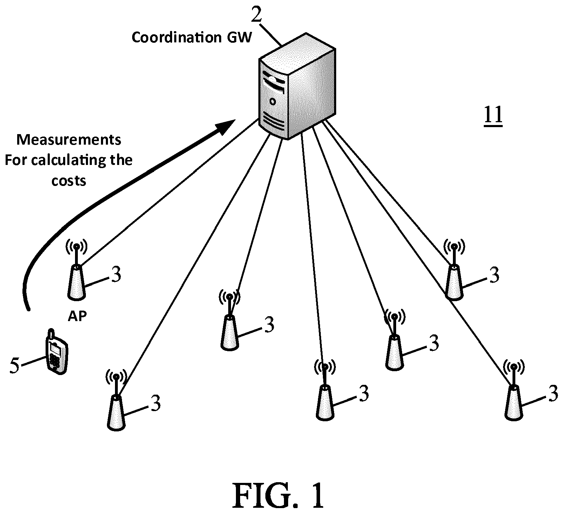

These conditions are illustrated in figure 1. In figure 1, a set of nodes 3 are all in communication with a coordination gateway 2. As noted above, each of the nodes 3 can take the form of a traditional base station in a cellular telecommunications network. Thus, each node 3 can form a wireless communications link with a user terminal 5 (UE). The nodes 3 can form cooperating clusters in order to enhance the communications with the user terminal 5 as described above.

Clustering for cooperation under CoMP employs searches, over all of the possible groups from the initial coarse cooperating set of nodes, for clusters that optimize the above listed conditions, and takes the form of a multidimensional knapsack problem. The solution of the multidimensional knapsack optimization problem is performed at the Self Optimized Network (SON) server in the Operation and Maintenance (OAM) of the LTE Core network and/or in the coordination gateway 2. This problem is tractable for medium-sized initial cooperating sets. Thus, CoMP tends to work well in existing 4G networks but does not scale well with increased node density in the network.

Future networks, such as 5G networks, which are likely to require higher node densities than current networks and also are likely to employ a variety of different node types. The term "heterogeneous network" is used within this document to refer to networks that contain a plurality of different types of node, wherein the term node is as defined above.

The determination of the cooperating sets in a large, densely connected, heterogeneous network is also a clustering problem. Thus, the determination of cooperating sets in large heterogeneous network is a problem involving the casting the nodes into groups with similar cooperation capabilities. These cooperation capabilities are defined per node for a user terminal, a group of user terminals attached to the node, a moving user terminal or a group of moving user terminals. Some nodes of the network may be moving.

In such future high density heterogeneous networks, the state-of-the-art CoMP technique will scale badly with the number of nodes. In other words, the optimization problem complexity increases with the number of nodes and the update of the cooperating sets is slow because of the delay in solving the global knapsack combinatory optimization.

The present invention is therefore aimed at improving the efficiency and scalability of cooperating set formation in high density heterogeneous or homogeneous networks. More specifically, the invention provides means for autonomous cooperating set formation that can provide cooperative services to user terminals or groups of user terminals including moving user terminals and/or moving nodes.

Document: Bertrand A et Al: "Seeing the bigger picture: How nodes can learn their place within a complex ad hoc network topology" IEEE Signal Processing Magazine, IEEE Service Center, Piscataway NJ, US vol. 30, no. 3, 1 May 2013 pages 71-82 ISSN:1053-5888, DOI:10.1109/MSP.2012.2232713 discloses methods for employing networks of nodes, such as processors, for performing distributed calculation of an algorithm. The method employs weighted graphs of the network for calculating suitable clusters of nodes.

Document: DI Lorenzo Paolo et al: "Distributed estimation and control of algebraic connectivity over random graphs", IEEE transactions on signal processing, IEEE Service Center, New York, NY, US, vol. 62, no. 21, 1 November 2014, pages 5615-5628, ISSN1053-587X, DOI:10.1109/TSP.2014.2355778 discloses methods of providing estimation and control of connectivity in an ad-hoc network.

## Summary

In a first aspect, there is provided a method of clustering nodes according to claim 1.

Thus, advantageously, there is provided a method wherein nodes in a network can be divided into clusters in a manner that takes account of the ability of the nodes to cooperate with one another. The method can be scaled easily to include large numbers of nodes that potentially have different cooperation capabilities. Moreover, the method permits easy recalculation of the clusters to permit its use in a dynamic environment, such as in a situation where nodes and/or the user terminal(s) are moving.

In some embodiments, the cooperation utility function comprises one or more of:

i) a function of the inverse of the transmission delay between nodes;
ii) a function of the current loading or resource utilisation of each node;
iii) a function of the available communication bandwidth provided by each node; or
iv) a function of the signal to noise and interference ratio, SINR at each node.

Thus, advantageously, a simple measure of the ability of the nodes to cooperate can be employed. Moreover by setting the cooperation to achieve a low delay and/or low loading, this so can lead to an improvement in the overall throughput of the at user equipment that is in the coverage of the nodes.

In some embodiments the cooperation utility function is a differential cooperation utility function that is calculated on the basis of the relative values of the cooperation utility function at each node with respect to another node in the telecommunications system.

Thus, advantageously, the clustering can be performed on the basis of a relative measure of the ability of the nodes to cooperate.

In some embodiments the cooperation graph comprises links between nodes, wherein two nodes are linked if the value of the cooperation utility function between them is above a threshold value.

In alternative embodiments, the cooperation graph comprises links between nodes and wherein a particular node is linked to a neighbouring node if that neighbouring node is among the group of nodes that together have the largest values of the cooperation utility function of all of the nodes that neighbour the particular node.

Thus, advantageously, there is provided simple means by which a cooperation graph can be formed.

In some embodiments, the nodes are divided into two clusters, and each node is a member of a first cluster if the Fiedler vector entry for that node is positive.

Thus, advantageously, there is provided simple means by which clusters of nodes can be formed and by which the nodes can join/leave the clusters autonomously.

In some embodiments, the Fiedler vector and algebraic connectivity are calculated by iteratively searching for a maximum eigenvalue and corresponding eigenvector of a consensus matrix defined by:

$$W = I - \varepsilon L - \left(\frac{1}{N}\right)\underline{1}\,\underline{1}^{T}$$

where:

$I$ is the identity matrix;
$N$ is the number of nodes in the graph;
$L$ is the Laplacian matrix;
$\varepsilon$ is a small number that is a function of the maximum eigenvalue of the Laplacian matrix;
$\underline{1}$ is vector having entries that are all 1; and
$\underline{1}^{T}$ is the transpose of vector $\underline{1}$.

Thus, advantageously, there is provided simple means by which the Fiedler vector and algebraic connectivity can be calculated.

In some embodiments a node is defined as a gateway node that connects two or more clusters of nodes if it has a Fiedler vector entry that has an absolute value that is less than a threshold value.

Thus, advantageously, there is provided simple means by which a gateway node can be defined.

In some embodiments the formation of a cluster of nodes is terminated when the cluster size is close to the threshold:

$$|K| = \sqrt{N\frac{|L(K_1, K_2)|}{\lambda}}$$

where

$K_1$ represents a first cluster of nodes;
$K_2$ represents a second cluster of nodes;
$\lambda$ is the algebraic connectivity; and
$|L(K_1, K_2)|$ is the number of nodes with Fiedler vector entries that are within a predetermined value of zero.

Thus, advantageously, there is provided simple means by which cluster sizes can be determined by the means of algebraic connectivity and Fiedler vector.

In some embodiments each node in the telecommunications system transmits its cooperation utility function to a central node, and wherein the central node performs the calculation of the Fiedler vector and the algebraic connectivity for the cooperation graph of the telecommunications system.

Thus, advantageously, there is provided a method by which the clustering of nodes can be carried out solely using a central node, this calculation reduces the processing load over the nodes.

In some embodiments, nodes in the network receive the calculated Fiedler vector and the algebraic connectivity from the central node and use this information to form local cooperating sets. For example, the central node determines from the calculated Fiedler vector the gateway nodes in the network and transmits to the gateway nodes, algebraic connectivity values. Then, the gateway nodes use the algebraic connectivity and the Fiedler vector of the neighbouring nodes of the gateway nodes in order to determine cooperation sets of size $|K|$ that are having similar Fiedler vector values.

Thus, advantageously, there is provided a method by which the clustering of nodes can be carried out in a semi-distributed manner thereby reducing the processing load on the central node and improving the reactivity of the cooperation scheme to local user traffic variation..

In some embodiments, the Fiedler vector and algebraic connectivity are calculated cooperatively among the nodes in the telecommunications system using a distributed iterative process.

Thus, advantageously, there is provided a method by which the clustering of nodes can be carried out in a distributed manner thereby removing additional processing load on a central node, or even removing the need to include a central node in the telecommunications system.

In a second aspect, there is provided a node for a telecommunications network according to claim 13.

In further aspects there is provided a computer program product comprising computer readable instructions which, when implemented on a processor perform all of the steps of the method of any first aspect, and a computer readable medium comprising such a computer program.

## Brief description of the drawings

The invention will now be described with reference to the accompanying Figures of which:

Figure 1 illustrates a cellular communications network of the prior art;
Figure 2 illustrates a cellular communications network applying clustering of communications nodes according to an embodiment of the invention;
Figure 3a illustrates a method of performing node clustering according to embodiments of the invention;
Figure 3b illustrates a method of forming a cooperation graph according to embodiments;
Figure 3c illustrates a method of calculating the Fiedler vector and algebraic connectivity of the cooperation graph of figure 3b;
Figure 4a illustrates a network as an example for performing clustering according to embodiments of the invention;
Figure 4b illustrates the network of figure 4a, with the nodes arranged in clusters according to embodiments of the invention;
Figure 5 illustrates a method of performing node clustering according to alternative embodiments of the invention;
Figure 6 illustrates a method of performing node clustering according to further alternative embodiments of the invention;
Figure 7 illustrates a method of clustering nodes according to the embodiments of figure 5; and
Figure 8 illustrates a method of clustering nodes according to the embodiments of figure 6.

## Detailed Description

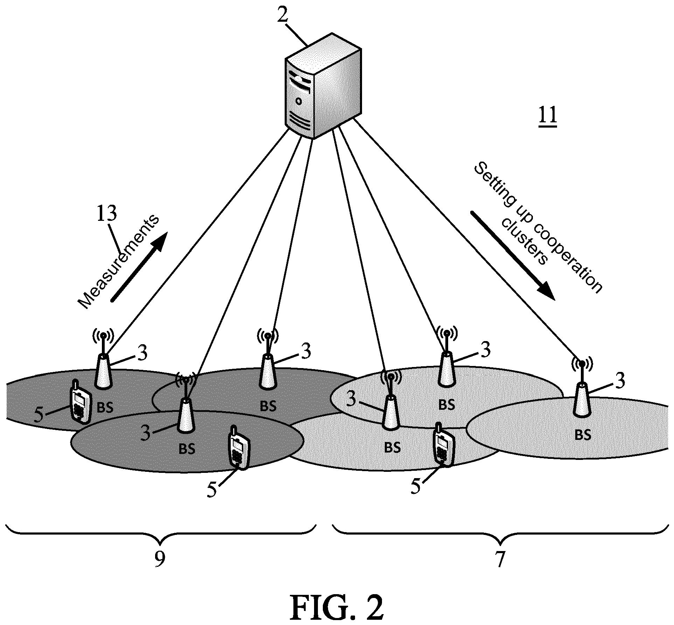

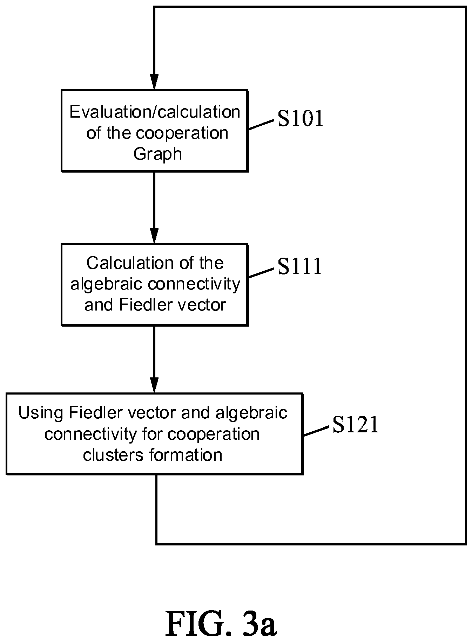

Figure 2 illustrates a simplified network 11 capable of employing methods according to an embodiment of the invention. As illustrated in figure 2 a central node 2 is configured to control a plurality of base stations (i.e. nodes) 3. The collection of nodes 3 together form a cellular network 11 in which UE 5 can communication with the node 3. Typically, this communication will be with the node 3 that is currently physically closest to the particular UE 5. As illustrated in figure 2, the nodes 3 are grouped into two different clusters; 7, 9 termed cooperating sets. Each cluster 7, 9 is illustrated to comprise three nodes 3, although in principle a cluster can comprise any number of nodes 3. Each node 3 sends 13 measurement values of a cooperation utility function to the central node 2 as a part of the process of cluster formation. This is described below with reference to figures 3a-3c.

In order for a node 3 to determine whether to join or leave a cooperating set 7, 9, and to identify its influence within the network 11 of cooperating sets 7, 9, i.e. as member of a set or as a "gateway" between several sets, the invention employs techniques inspired from *social networks analysis* to provide each node 3 with one or more clustering metrics.

One such metric employed is based on the eigenvalues and/or eigenvectors of a cooperation graph that can be calculated either at the central node 1 that has the full topological information knowledge or cooperatively by the nodes 3 themselves.

This cooperation utility function can then be used to characterize the "a priori" cooperation capabilities of each node 3 as well as the possibility for cooperation between each pair of nodes 3 in the network 11.

An advantage of this type of clustering is to provide the nodes with a local community indicator that helps each node to identify other nodes with which cooperation is/would be helpful for at least one of the user terminals in the coverage of the nodes 3. This local community indicator reduces the delay for the establishment of cooperation between nodes and therefore increases the overall reactivity of the cooperation in the network.

Subsequently, the cooperation capabilities of the nodes are described and the community indicator will be described as a solution to the cooperation graph minimum ratio cut optimization problem.

Figure 3a illustrates an example of a method according to an embodiment. In a first step S101, a cooperation graph of the nodes 3 in a network is determined. Secondly S111, the algebraic connectivity and Fiedler vector of the cooperation graph are determined. Finally, the nodes 3 are formed S121 into clusters using the determined Fiedler vector and algebraic connectivity. As illustrated in figure 3a, the method can be applied repeatedly to update the clusters as propagation conditions and/or network topology changes over time. This change in conditions can, for example, be the addition or removal of a UE 5 or node 3 within the network, or a motion of a UE 5 or node 3 within the network 11.

There now follows a detailed description of the method, illustrated in figure 3a, of determining clusters of nodes 3 in a network 11.

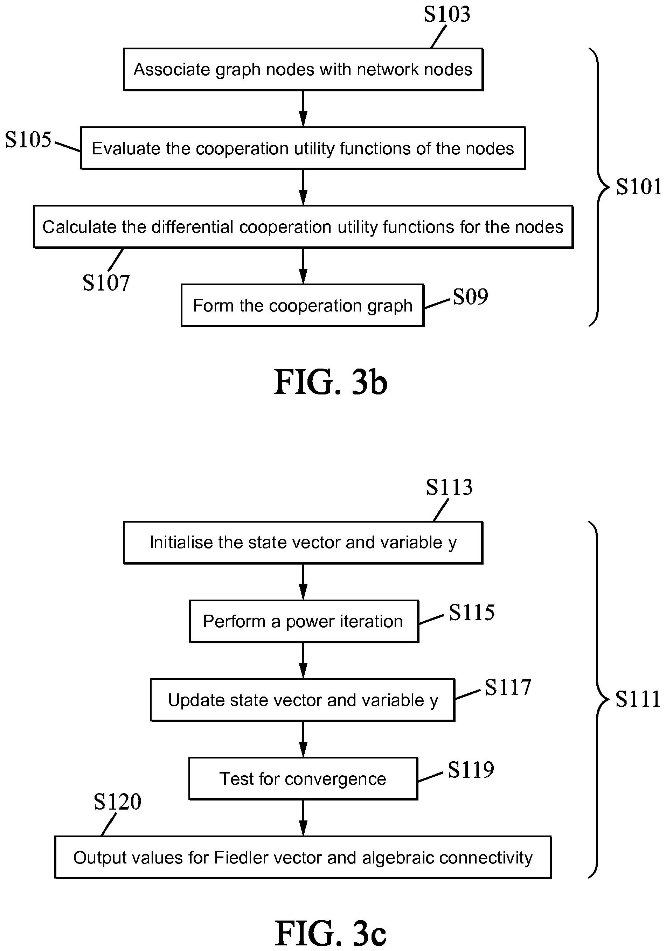

A cooperation graph is defined to be a representation of the cooperation relations in the network 11, or in a region of the network 11. The process S101 of determining a cooperation graph includes the steps described below, which are illustrated in figure 3b.

**First step**

In a first step, each node of the cooperation graph is associated S103 with a node 3 of the network 11 and each node 3 evaluates S105 a cooperation utility function.

The cooperation utility function, $U_j$ for a node j is a function expressing the cooperation capabilities of the nodes 3.

In a first example, in some embodiments, the cooperation utility function of a node $j$ is a function of the inverse of the transmission delay over the backhaul for the node $j$. Here, the term backhaul refers to the communication link between the node in question and the core network serviced by the node to allow communication between the node and other node or other parts of the network. This communication link is typically provided via a microwave link or wired connection, such as a fibre-optic link.

If the cooperation utility function is defined in this manner, then it can be expressed as:

$$U_j = f\left(\frac{1}{\tau_j}\right).$$

Thus, the cooperation utility function is at maximum for low transmission delay values, i.e. $U_j = U_{max}$ if $\tau_j = 0$ and $U_j = U_{min}$ when the delay is large, i.e. $\tau_j > \tau_t$, where $\tau_t$ is the maximum tolerable delay for cooperation.

In a second example, in alternative embodiments, the cooperation utility function is a function of the current load or resource utilization of the *node j*. In this case the *node j* can cooperate if its load is below a threshold $\rho_0$. Thus the cooperation utility function, $U_j$, can be expressed as:

$$U_j = g\left(\frac{\rho_0}{\rho_j}\right)$$

Here, the cooperation utility function, $U_j$, is at maximum value $U_j = U_{max}$ for high values of $\frac{\rho_0}{\rho_j}$ and $U_j = U_{min}$ for low values of $\frac{\rho_0}{\rho_j}$.

In a third example, in further alternative embodiments, the cooperation utility function, $U_j$, is a function of the bandwidth of the node $j$. Thus the cooperation utility function, $U_j$, can be expressed as:

$$U_j = L\left(BW_j\right)$$

Where $BW_j$ signifies the bandwidth of the node $j$.

In a fourth example, the cooperation utility function, $U_j$, can be expressed as a function of the signal to interference and noise ratio (SINR) at the node $j$. Thus, the cooperation utility function, $U_j$, can be expressed as: $U_j = K(SINR_j)$. Where SINR signifies the signal to interference and noise ratio.

In the third and fourth examples, the cooperation utility function is at its maximum value either when the bandwidth of the node $j$ is above a minimum bandwidth for cooperation $BW_0$ or when the signal to interference ratio to the node $j$

is above minimum SINR necessary for the cooperation establishment $SINR_0$.

In a fifth example, in further alternative embodiments, the cooperation utility function of the node $j$ is the product of one or more of the cooperation utility functions presented previously. For example, it can be expressed as:

$$U_j = f\left(\frac{1}{\tau_j}\right) g\left(\frac{\rho_0}{\rho_j}\right) L(BW_j) K(SINR_j).$$

Whilst one example of a cooperation utility function using a product of the previously described utility functions is given here, the skilled person will recognize that equally other such utility functions can be derived from functions of two or more of the above described cooperation utility functions.

### Second step

In a second step S107, the differential cooperation utility, $\delta U_{i,j}$, function is calculated for each pair of nodes $(i,j)$. In the presently described embodiment, this calculation is performed by the central node. However, the skilled person will recognise that the calculation could equally be performed elsewhere, such as locally at the nodes themselves. This, for the examples discussed above, the following is calculated:

In the first example described above (where the cooperation utility function of a node $j$ is a function of the inverse of the transmission delay over the wired backhaul for the node $j$), the differential cooperation utility function is the difference between the individual cooperation utility functions of the nodes $i$ and $j$, or the absolute value of this difference. Thus, it can be expressed as:

$$\delta U_{i,j} = U_i - U_j \text{ or } \delta U_{i,j} = \left| U_i - U_j \right|.$$

In the second example described above (where the cooperation utility function is a function of the current load or resource utilization of the node $j$ ), the differential cooperation utility function is the sum of the difference between the cooperation utility functions and a function of the wireless backhaul delay (radio propagation delay) $\theta_{ij}$ between the nodes $i$ and $j$. Thus, it can be expressed as:

$$\delta U_{i,j} = q\left(\frac{1}{\theta_{ij}}\right) + \left(U_i - U_j\right).$$

In the third and fourth examples described above (where the cooperation utility function is a function of the bandwidth of the *node j*, i.e. $U_j = L(BW_j)$, or a function of the signal to interference and noise ratio at the *node j*, i.e. $U_j = K(SINR_j)$), the differential utility function is the sum of the difference between the utility functions and a function of the wired backhaul delay $\Omega_{ij}$ between the nodes $i$ and $j$. Thus, it can be expressed as:

$$\delta U_{i,j} = p\left(\frac{1}{\Omega_{ij}}\right) + \left(U_i - U_j\right).$$

In the fifth example described above (where the cooperation utility function of the node $j$ is the product of one or more of the cooperation utility functions presented previously), the differential cooperation utility function is the sum of the difference between the cooperation utility functions and function of the product of the wireless and wired backhaul delays. Thus, it can be expressed as:

$$\delta U_{i,j} = p\left(\frac{1}{\Omega_{ij}}\right) q\left(\frac{1}{\theta_{ij}}\right) + \left(U_i - U_j\right).$$

## Third step

In a third step S109, the cooperation graph is formed, based on the differential cooperation utility functions as follows:

In the first example described above, the nodes $i$ and $j$ are linked by an edge in the cooperation graph if the differential cooperation utility function between the nodes $i$ and $j$ is below a threshold, i.e. $\delta U_{i,j} \leq u$. Otherwise, the nodes $i$ and $j$ are not connected by an edge in the cooperation graph.

Within this document the term "edge", as used in reference to cooperation graphs, is used in the sense of graph theory, wherein it denotes a link between two nodes within a graph.

In the second example described above, the nodes $i$ and $j$ are linked by an edge in the cooperation graph if the node $j$ is among the $k$ neighbouring nodes of the node $i$ with the smallest differential cooperation utility function or the node $i$ is among the $k$ neighbouring nodes of the node $j$ with the smallest differential utility function.

In the third and fourth examples described above, the nodes $i$ and $j$ are linked by an edge in the cooperation graph if the node $j$ is among the $k$ neighbouring nodes of the node $i$ with the smallest differential cooperation utility function and the node $i$ is among the $k$ neighbouring nodes of the node $j$ with the smallest differential cooperation utility function.

In the fifth example described above, the nodes $i$ and $j$ are linked by an edge in the cooperation graph if the similarity between the cooperation utilities of the nodes $i$ and $j$ is above a threshold.

$$\text{i.e.} \quad \exp\left(-\frac{\left|\delta U_{i,j}\right|^2}{\sigma^2}\right) \geq K$$

Here $\sigma$, $K$ are parameters that are fixed by the core network. The parameter $\sigma$ controls the average cooperation capabilities between the members of a cooperating group, while the parameter $K$ controls the dissimilarity in cooperation between the different cooperating groups in the network. Thus, the core network can adapt the cooperation to the changing traffic in the network increasing cooperation between the nodes in region with higher traffic intensity and decreasing the cooperation in region with lower traffic.

In all of the examples described above, the edges of the cooperation graph can be either unweighted as described previously or weighted with the following weights: $\delta U_{i,j}$ for the edge between the nodes $i$ and $j$.

Thus, in embodiments where such weighting is used, the edge between the nodes $i$ and $j$ is weighted with a similarity function:

$$S_{i,j} = \exp\left(-\frac{\left|\delta U_{i,j}\right|^2}{\sigma^2}\right)$$

The cooperation graph is computed in order to determine which nodes can efficiently cooperate with each other. One criterion is how the cooperation should be beneficial to at least a maximum number of user terminals. For instance, a good wired backhaul between the nodes and the core network can allow the nodes to receive higher throughput and so improve the throughput gain of the user terminals from cooperation. Another criterion is the quality of the wireless backhaul between the nodes that allow the higher throughput to be exchanged between the nodes during cooperation. This wireless backhaul quality can be obtained through radio proximity between the nodes, rendered by the SINR or wireless propagation delay between two nodes. Another possible criterion is related to the overall resource usage in the network. For example, in cooperative multipoint transmission (CoMP), similar data is transmitted from at least two cooperating nodes to at least one user terminal UE. In order to transmit cooperatively this data to the users, resources should be reserved at the nodes so nodes with high enough bandwidth and/or low load are highly improving the throughput of the CoMP users.

Once the cooperation graph is obtained, the step of is to use the cooperation graph for the calculation of the algebraic connectivity and the Fiedler vector (S111 in figure 3a). Subsequently, these can be used S121 to allow clustering of the nodes 3.

The clustering envisioned by the invention comprises clustering the nodes of the cooperation graph into distinct clusters, such that the number of edges within each cluster is maximized and the number of edges connecting different clusters is minimized.

**Example of clustering**

There now follows an example of clustering the nodes in a cooperation graph into two distinct clusters $K_1$ and $K_2$ and the problem formulation as a minimum cut set optimization problem. The skilled person will be familiar with the term minimum cut as used in relation to graph theory, and so a further explanation will not be provided here.

Consider the clustering of the nodes of a cooperation graph into two clusters $K_1$ and $K_2$, having $L(K_1,K_2)$ edges connecting the clusters $K_1$ and $K_2$ and having the connectivity (i.e. number of edges)= $|K_1|,|K_2|$

A clustering method employed by the present invention finds the clusters with the biggest sizes and that are having the lowest number of edges connecting them. Thus, this method minimizes the ratio cut, i.e. the function where:

$$\rho(K_1, K_2) = \frac{|L(K_1, K_2)|}{|K_1||K_2|}$$

This general clustering for ratio cut minimization is a non polynomial hard combinatory optimization problem (NP-hard). Thus, no exact and efficient polynomial time algorithm exists for general graph topologies.

Spectral graph clustering techniques are approximate techniques for the approximation of minimum ratio cut clustering optimization. Spectral clustering is based on the idea that the minimum ratio cut optimization problem can be converted into a linear optimization problem, wherein the eigenvector corresponding to the second smallest eigenvalue of the Laplacian matrix of the cooperation graph is a solution for the minimum ratio cut optimization.

The eigenvector entry for the node $j$ , $v_j$, can be interpreted as the community indicator for the node $j$. In other words:

The node $j$ belongs to the cluster $K_1$ if $v_j > 0$, and
node $j$ belongs to the cluster $K_2$ otherwise.

Here, $v_j$ is defined as is the $j^{th}$ entry of the second smallest eigenvector of the Laplacian matrix.

This community indicator is known as the Fiedler vector $\underline{F}$ and the corresponding eigenvalue $\lambda$ is known as the algebraic connectivity.

For a graph of $N$ nodes and a partition $(K_1, K)$, the algebraic connectivity provides a lower bound on ratio cut $\rho(K_1,K_2)$ as:

$$\min_{K_1,K_2} \rho(K_1, K_2) \geq \frac{\lambda}{N}$$

Where $\min_{K_1,K_2}\rho(K_1,K_2)$ is the minimum ratio cut obtained over all the possible partitions $(K_1,K_2)$. The ratio cut is defined above.

Assuming that we want equally sized partitions: $|K_1|=|K_2|$, this relation will provide us with a heuristic on the

$$|K| = \sqrt{N\frac{|L(K_1, K_2)|}{\lambda}} \quad .$$

cluster size, i.e. at most, we will have clusters of size

The Fiedler vector provides a heuristic that describes the structure of the clusters, i.e. a metric that provides to each node the information about the clusters of nodes to which it belongs. In the example of the two clusters mentioned previously, the Fiedler vector element $v_i$ of the node i provides the information that the node is member of cluster $K_1$ if $v_i > 0$ . Otherwise the node is member of the cluster $K_2$ if $v_i \leq 0$.

The nodes with Fiedler vector elements close to 0, i.e. the node with $|v_i| \leq \delta$ for a small real number $|\delta| < 1$, are the bridge or gateway nodes that connect the clusters $K_1$ and $K_2$. These are nodes, beyond which, a terminal (UE) may have to change to another cooperating set.

In the described embodiment, the calculation of the algebraic connectivity and the Fiedler vector is performed through a power iteration technique. The principle of the power iteration technique is to iteratively search for the maximum eigenvalue and the corresponding normalized eigenvector of the modified consensus matrix instead of the second minimum eigenvalue and the corresponding eigenvector of the cooperation graph Laplacian. The modified consensus matrix is defined as the following:

$$W = I - \varepsilon L - \left(\frac{1}{N}\right)\underline{1}\underline{1}^T$$

Where:

> I is the identity matrix,
> N is the number of nodes in the graph,
> L is the Laplacian matrix,
> $\varepsilon$ is a small number that is a function of the maximum eigenvalue of the Laplacian matrix,
> $\underline{1}$ is vector having entries that are all 1, and
> $\underline{1}^T$ is the transpose of the above vector.

The Laplacian matrix can is defined as the difference between the degree matrix of the nodes and the adjacency matrix of the graph. Two different definitions of the adjacency matrix of the graph can be employed:
Firstly, the adjacency matrix $A$ of the graph can be defined as the binary matrix where the element $A_{i,j} = 1$ if the nodes $i$ and $j$ are connected by an edge in the cooperation graph, otherwise the element $A_{i,j} = 0$ .

Secondly, the adjacency matrix $A$ of the graph can be defined as the matrix where the element $A_{i,j}$ is equal to the similarity between the nodes $i$ and $j$, i.e. $A_{i,j} = S_{i,j}$ if the nodes $i$ and $j$ are connected by an edge, otherwise the element $A_{i,j} = 0$.

The adjacency matrix can be chosen to be binary or real matrix, depending on the utility used for the definition of the

$$S_{i,j} = \exp\left(-\frac{\left|\delta U_{i,j}\right|^2}{\sigma^2}\right) > K ,$$

cooperation graph. For example $A_{i,j} = 1$ if $\qquad$ otherwise $A_{i,j} = 0$. The other option is $A_{i,j} = S_{i,j}$. Thus, using the binary adjacency matrix form include the parameter $K$ that is controlled and provided by the network while the second option will represent the cooperation relations in the network obtained only from the utility/differential utility functions.

The degree matrix is the diagonal matrix where the entries are the sum of the rows of the adjacency matrix:

$$D = diag\{D_{ii}\} \text{ and } D_{jj} = \sum_{i=1}^{N} A_{ij}$$

Again, N is the number of nodes in the graph.

With theses definitions, the Laplacian matrix is defined as:

$$L = D - A$$

As noted above, the parameter $\varepsilon$ is a small parameter that is function of the maximum eigenvalue of the Laplacian matrix. One possible technique for the determination of the parameter $\varepsilon$ is to use the power iteration technique described next for the determination of the maximum eigenvalue of the Laplacian, denoted $\lambda_0$. The parameter $\varepsilon$ can be defined as

$$\varepsilon = \frac{1}{\lambda_0} .$$
The power iteration technique then calculates Sill iteratively the algebraic connectivity and the Fiedler vector of the graph via the following method, which is illustrated in figure 3c:
In a first step S113, a state vector $\underline{x}$ of size $N$ and variable y are initialized to a random vector and 0, respectively. Subsequently, a power iteration technique is applied S115. At each iteration S115 of the power iteration technique, the

$$y_0 = \frac{\underline{x}^T W \underline{x}}{\underline{x}^T \underline{x}} .$$
Rayleigh coefficient is calculated for the current state vector as

Subsequently, the variable $y$ is updated S117 as $y = y + \alpha(y_0 - y)$ and the state vector is updated S117 as

$$\underline{x} = \frac{W\,\underline{x}}{\left|W\,\underline{x}\right|} \;.$$

The parameter $\alpha$ is the step of the gradient that is fixed by the core network. An example of the determination

$$\alpha = \frac{1}{\sqrt{iter}}\;.$$

of this step parameter is to set Where *iter* is the iteration counter of the power iteration technique that is set to *iter*=1 at the beginning and is incremented with each iteration of the power iteration technique.

Convergence of the power iteration is then tested. If the power iteration technique converges, i.e. if $y \approx y_0$ within a predefined limit, then the algorithm stops. Otherwise the algorithm is reiterated by repeating from S115. Upon convergence, the converged values of the Fiedler vector and algebraic connectivity are output S120. The Fiedler vector is given by the last state vector x and the algebraic connectivity is given by the parameter $\lambda = \frac{(1-y)}{\varepsilon}\;.$

The last step S121 of the method of the present embodiment is to use the Fiedler vector and the algebraic connectivity for cluster formation and dimensioning. To achieve this, in the present embodiment, the Fiedler vector and the algebraic connectivity are calculated in the central node 1 that determines the clusters. This embodiment is thus termed the "centralized embodiment".

For the case of two clusters, the node *j* is member of the cooperation cluster $K_1$ if the *j*-the Fiedler vector entry is positive. Otherwise the node *j* is member of the cooperation cluster $K_2$. The cluster sizes are determined by the algebraic connectivity since cluster formation is stopped when the cluster size is close to the threshold:

$$|K| = \sqrt{N\frac{\left|L(K_1,K_2)\right|}{\lambda}}$$

where $|L(K_1,K_2)|$ is the number of nodes with Fiedler vector entries close to zero.

For the case of multiple cooperation clusters, the Fiedler vector is quantized over multiple levels through the K-means algorithm. The quantized value *m* of the *j*-th Fiedler vector indicates that *node j* is member of the cluster *m*. The cluster size for the case of *M* clusters may be determined as:

$$|K| = \left(N\frac{L}{\lambda}\right)^{1/M}$$

where L is the total number of gateways. Gateway nodes are determined for the case of multiple clusters as the nodes with Fiedler vector values close to the vector quantization thresholds:

$$\delta_1 = (2m/M)-1 \,,\, \delta_2 = (2(m+1)/M)-1;\; m=1,2,...M$$

Alternatively, the multiple cooperation clustering can be obtained by repeatedly performing two-level clustering until the size of the obtained cooperation clusters is above a threshold predefined by the network.

### Specific example

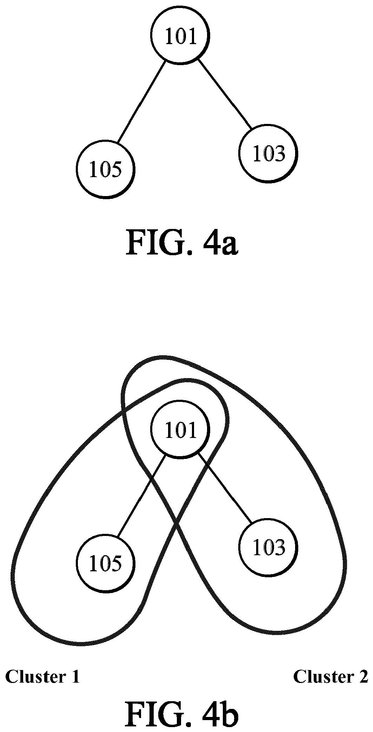

As a simple specific example of the method of the present embodiment, consider the network with three nodes as illustrated in figure 4a. In the illustrated network, the nodes are labelled 101, 103 and 105, cooperation is possible between node 101 and 103, and between 101 and 105. However, there is direct cooperation possible between nodes 105 and 105.

Without loss of generality, the example illustrates the proposed clustering for a network of three nodes where the cooperation graph is described by a binary adjacency matrix, i.e. only maximum cooperating nodes are left in the adjacency matrix representation of the cooperation relations in the network.

The skilled person will recognize that the adjacency matrix A of the network is given by the following matrix equation:

$$A = \begin{bmatrix} 0 & 1 & 1 \\ 1 & 0 & 0 \\ 1 & 0 & 0 \end{bmatrix}$$

In the matrix equation, rows one to three and columns one to three each represent nodes 101, 103 and 105 respectively. An entry of 0 indicates that the nodes are not included in the cooperation relations, while an entry of 1 indicates that cooperation is maximum. Thus, in the first row node 101 can cooperate with both nodes 103 and 105. "self-cooperation" e.g. node 101 cooperating with itself is trivial, and so excluded from the equation. Hence, the leading diagonal of the matrix is represented with zeros.

As noted above, the degree matrix is the diagonal matrix where the entries are the sum of the rows of the adjacency matrix. The Laplacian matrix of the above matrix equation is in turn defined as the degree matrix $D$ minus the adjacency matrix. Thus, the Laplacian matrix, $L$, in this example is given as:

$$L = \underbrace{\begin{bmatrix} 2 & 0 & 0 \\ 0 & 1 & 0 \\ 0 & 0 & 1 \end{bmatrix}}_{D} - \underbrace{\begin{bmatrix} 0 & 1 & 1 \\ 1 & 0 & 0 \\ 1 & 0 & 0 \end{bmatrix}}_{A} = \begin{bmatrix} 2 & -1 & -1 \\ -1 & 1 & 0 \\ -1 & 0 & 1 \end{bmatrix}$$

Also as noted above, the modified consensus matrix is obtained from the Laplacian matrix via the following equation:

$$W = I - \varepsilon L - (1/N)\underline{1}\underline{1}^T$$

Where $I$ is the identity matrix of size 3x3 (in this specific example), $N$ is the number of the nodes in the network (N=3 in this specific example), 1 is a vector of ones of size 3 (in this specific example). The parameter $\varepsilon$ is set in this example as $\varepsilon$ = 1/3. The modified consensus matrix is therefore given as:

$$W = \begin{bmatrix} 0 & 0 & 0 \\ 0 & 0.333 & -0.333 \\ 0 & -0.333 & 0.333 \end{bmatrix}$$

The algebraic connectivity is obtained as the maximum eigenvalue of the matrix $W$ and the Fiedler vector is the corresponding eigenvector. The skilled person will recognize from this that in the present example, these parameters are given as:

$$\lambda = 0.6667$$

$$F = \begin{bmatrix} 0 & -0.7071 & 0.7071 \end{bmatrix}$$

The algebraic connectivity determines the size of the cooperation clusters, i.e. the number of nodes per cooperation cluster $N_c$ as $N_C = \sqrt{N/\lambda} \approx 2$ .

The Fiedler vector value determines to which cluster the node is belonging. For two clusters:

- The node 101 is cluster head and it is a member of cluster (1) and cluster (2) since its Fiedler vector value is 0.
- The node 103 belongs to cluster (1) since its Fiedler vector value is negative.
- The node 105 is belongs to cluster (2) since its Fiedler vector value is positive.

Thus, the clustering in this specific example may be summarized as illustrated in figure 4b. As illustrated in figure 4b, the nodes are arranged into two clusters, with nodes 101 and 103 in a first cluster and nodes 101 and 105 in a second cluster. The skilled person will recognize that this is a trivial example for the purposes of illustration. In general, there is no limitation on the number of nodes that can be considered during the clustering process, and also no particular limitation on the number of clusters into which they can be divided. Moreover, depending upon the particular situation in question, there is also no limitation on the number of nodes that are present within each cluster, and in general the number of nodes in clusters will differ between clusters. Further, there is no limitation on the number of cluster to which each particular node within a network may belong.

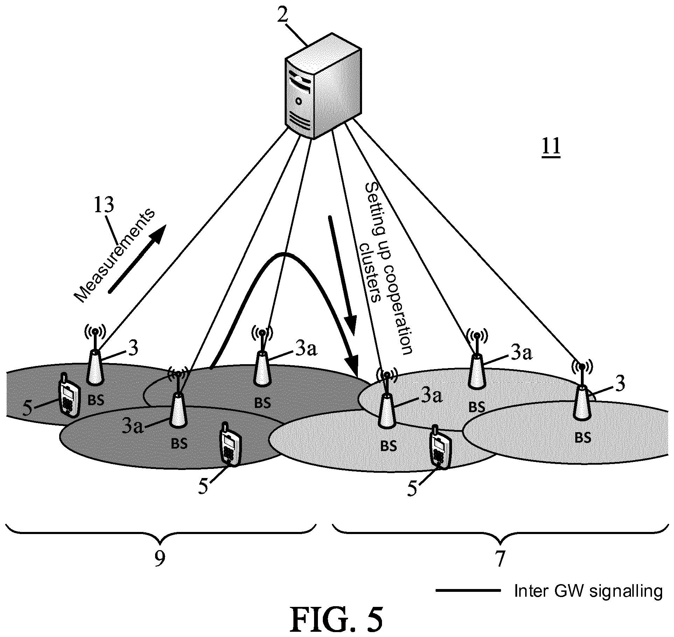

In an alternative embodiment, termed the "semi-distributed embodiment" and illustrated in figure 5, the Fiedler vector and the algebraic connectivity are calculated in a central node 2 and transmitted to the nodes of the network. Thus, as with the previous embodiment, measurement values of the cooperation utility function are first transmitted 13 from each node 3, 3a to the central node 2 for calculation of the Fiedler vector and the algebraic connectivity. Subsequently, the calculated Fiedler vector and algebraic connectivity are transmitted to the nodes 3, 3a to permit derivation of the clusters.

In this embodiment, the gateway nodes 3a dynamically form clusters with neighbouring nodes. As illustrated in figure 5 a central node 2 is configured to control a plurality of nodes 3, 3a. The collection of nodes 3, 3a together form a cellular network 11 in which UE 5 can communicate with the nodes 3, 3a. Typically, this communication will be with the node 3 that is currently physically closest to the particular UE 5. As illustrated in figure 5, the nodes 3 are grouped into two different clusters; 7, 9 termed cooperating sets. Each cluster 7, 9 is illustrated to comprise three nodes 3, although in principle a cluster can comprise any number of nodes 3.

In this embodiment, the nodes 3 themselves determine which among them are the gateway nodes.

For the case of two clusters, the gateway nodes 3a are the nodes having the Fiedler vector elements that are closest to the threshold 0.

i.e. $|v_i| \leq \mu$.

The cluster formation process stop criterion will be based on the algebraic connectivity estimate that is available at the nodes of the network with small Fiedler vector values.

For the case of $M$ clusters, the gateway nodes are nodes 3a with Fiedler vector values *close* to the vector quantization thresholds:

$$\delta_1 = (2m/M) - 1, \delta_2 = (2(m+1)/M) - 1; m = 1,2,...M \text{ , i.e. } |v_i - \delta| \leq \mu$$

The cluster formation process stop criterion will be based on algebraic connectivity estimate that is available at the nodes 3, 3a of the network with Fiedler vector values close to the quantization thresholds.

As with the previous embodiment, the multiple cooperation clustering can be obtained in an alternative manner by repeatedly performing two-level clustering until the size of the obtained cooperation clusters close to a threshold that is dependent of the algebraic connectivity. In this case, the number of cooperation clusters is even.

In a further alternative embodiment, the Fiedler vector and the algebraic connectivity are calculated cooperatively between the nodes of the network. This is an alternative "semi-decentralised" embodiment. Here, a central node 11 provides the parameter $\mu$ for identifying the gateway nodes 3.

For the case of two clusters: the gateway nodes 3 are the nodes having the Fiedler vector elements close to the threshold 0, i.e. $|v_i| \leq \mu$. The cluster formation process stop criterion will be based on algebraic connectivity estimate that is available at the nodes of the network with small Fiedler vector values.

For the case of $M$ clusters: the gateway nodes 3 are nodes with Fiedler vector values *close* to the vector quantization thresholds $\delta_1 = (2m/M)-1, \delta_2 = (2(m+1)/M)-1$; $m=1,2,...M$ ,.i.e. $|v_i - \delta| \leq \mu$. The cluster formation process stop criterion will be based on algebraic connectivity estimate that is available at the nodes of the network with Fiedler vector values close to the quantization thresholds.

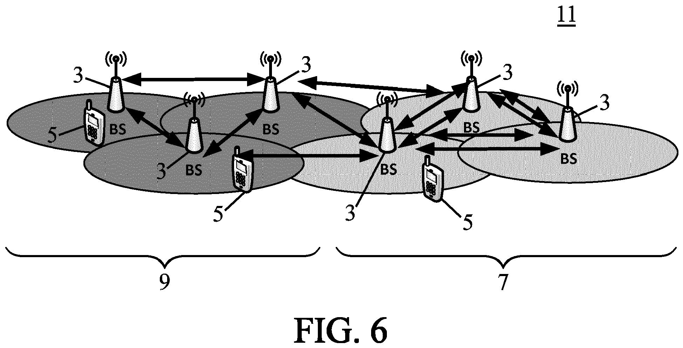

In a further alternative embodiment, the Fiedler vector and the algebraic connectivity are calculated cooperatively between the nodes of the network. This alternative embodiment is termed the "distributed embodiment" and is illustrated in figure 6. As illustrated in figure 6 a plurality of nodes 3 together form a network. A central node (not illustrated) will normally be present in the network but, since it need not play any part in the clustering process described in this embodiment, no such node is illustrated. The collection of nodes 3 together form a cellular network 11 in which UE 5 can communication with the nodes 3. Typically, this communication will be with the node 3 that is currently physically closest to the particular UE 5. As illustrated in figure 6, the nodes 3 are grouped into two different clusters; 7, 9 termed cooperating sets. Each cluster 7, 9 is illustrated to comprise three nodes 3, although in principle a cluster can comprise any number of nodes 3.

In this embodiment, the Fiedler vector value and the algebraic connectivity are exchanged between neighbouring nodes 3. The nodes 3 autonomously decide to join/leave the cooperation cluster based on average Fiedler vector values within the cooperation cluster. This fully decentralized embodiment will be described in more detail below with reference to the examples.

Each of the described embodiments have the following general advantages over prior art techniques for cluster (cooperating set) formation:

- Increased flexibility and fast cooperating set formation when compared to the state-of-the-art cooperation based on solving knapsack combinatory optimization problem.
- Low complexity since the power iteration technique has low complexity compared to dynamic programming used for solving knapsack.
- Increased reactivity to the network environment since the cooperating set formation can be carried out cooperatively between the nodes of the network.

Fast clustering is useful for taking into account:

- Rapid network topology changes due to moving nodes, like base stations in a vehicle. For instance, radio propagation delays between nodes, SINR at the node, backhaul delay are important factors for taking this network topology into account.
- High terminal mobility (UE). For instance, load or resource utilization of a node is an important factor for taking this network topology into account.

## Example implementations

### Centralized embodiment

As noted above with reference to figure 2, in this embodiment, the Fiedler vector and the algebraic connectivity are calculated by the central node 2. The cooperation clusters are determined by the central node 2. The central node 2 triggers the association and/or release of each node 3 to/from the cooperation cluster. The Fiedler vector and/or the algebraic connectivity are re-evaluated periodically by the central node 2 in order to verify the relevance of the cooperation clustering to the current network topology. For example, the central node 2 can calculate and monitor the algebraic connectivity of the cooperation graph. If significant change of the algebraic connectivity is detected, the central node 2 can:

- Re-calculate the full cooperation graph, the Fiedler vector and the algebraic connectivity and apply clustering based on new Fiedler vector values.
- If the algebraic connectivity variation is low, the central node calculates offsets based on the algebraic connectivity variation. These offsets are applied to the last Fiedler vector value in order to obtain the new Fiedler vector corresponding to the current algebraic connectivity and without recalculating the full topology.

The advantage of this embodiment with respect to the state of the art is the reduction of the complexity when compared to the knapsack based clustering that is performed in the coordinated multipoint (CoMP) cooperation groups formation in the state of the art networks with similar performance.

### Semi-centralized embodiment

As noted above in relation to figure 5, in this embodiment, the Fiedler vector and the algebraic connectivity are calculated by the central node 2. The central node transmits these parameters to the nodes 3 of the network. The nodes 3 of the network 11 then use these parameters for forming local cooperating sets. The gateway nodes 3a trigger the formation of the local cooperating sets. In this embodiment, the central node 2 will sort the gateway nodes with respect to increasing Fiedler vector nodes values and send a command to the nodes 3 based on this ordering. In further alternative embodiments, the gateway nodes trigger the formation of the cooperation clusters autonomously, i.e. without any specific ordering..

The gateway nodes 3a are determined by the following:

For the case of two clusters: the gateway nodes 3a are the nodes having the Fiedler vector elements close to the threshold 0, i.e. $|v_i| \leq \mu$. The cluster formation process stop criterion will be based on algebraic connectivity estimate that is available at the nodes 3 of the network 11 with small Fiedler vector values.

For the case of $M$ clusters: the gateway nodes 3a are nodes with Fiedler vector values close to the vector quantization thresholds, i.e. $|v_i - \delta| \leq \mu$. The cluster formation process stop criterion will be based on algebraic connectivity estimate that is available at the nodes of the network with Fiedler vector values close to the quantization thresholds:

$$\delta_1 = \left(2m/M\right) - 1, \delta_2 = \left(2(m+1)/M\right) - 1; \, m = 1,2,...M \ .$$

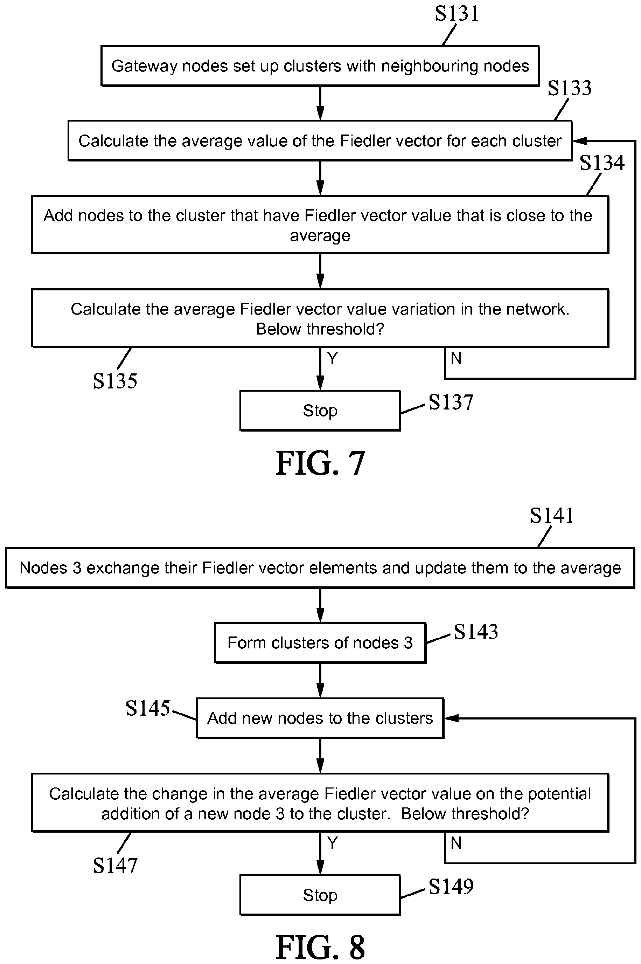

For example, the gateway node *i* of the network 11 may decide to form cooperating sets with the neighbouring nodes 3 of the network 11 by the following procedure, which is illustrated in figure 7:
Firstly, the gateway node 3a sets up S131 cooperation a cluster with neighbouring nodes 3 which have similar values of their Fiedler vector, i.e. the gateway node 3a finds the neighbouring nodes $v_j$ such that their Fiedler vector values are close to each other and limited by a threshold.

Secondly, the average value of the Fiedler vector is calculated S133 for each cluster and new nodes are added S134 to the cluster if their Fiedler vector value is close to the average value of that cluster. This calculation will typically be performed by the gateway node 3a.

Thirdly, calculate S135 the average Fiedler vector value variation in the network 11. If this is below a predetermined threshold value, then the method stops S137, if not then the method repeats from step S133.

In this embodiment, the central node 2 initially evaluates the algebraic connectivity and the Fiedler vector for the full network topology. Once the gateway nodes 3a have determined their local cooperation clusters, the central node 2 reduces the cooperation graph into a subgraph of the clusters, i.e. the central node 2 receives the list of the nodes 3 of the cooperation cluster *i* managed by the gateway node *i* and associates this cluster to a node in a cluster cooperation graph. The clusters are linked by the edges of their gateways. In other words, the central node 2 stores the cooperation graph representing the cooperation between clusters of nodes 3, and so each entry in the stored cooperation graph represents a cluster of nodes 3. The local cooperation relationships are managed in the node clusters.

Thus, the complexity is reduced at the central node 2 in comparison to the centralised embodiment, and flexibility is added to the cooperation group's formation since the gateway nodes 3a are managing local topology changes rather than recalculating the full topology in the central node 2. This local topology management is performed through direct communication established between the gateway nodes 3a. This direct communication is established through the central node 2.

The advantages of the semi-centralized embodiment are an increased flexibility and fast cooperating set formation when compared to the centralized embodiment, complexity reduction at the central node 2 and increased reactivity of the cooperation groups formation to the network topology changes.

## Distributed embodiment

As noted above in relation to figure 6, in this embodiment, the nodes 3 of the network 11 cooperatively evaluate the Fiedler vector and the algebraic connectivity and setup cooperation groups, based on the value of their Fiedler vector. For example, the central node 2 or one node of the network 11 will autonomously trigger the distributed calculation of Fiedler vector values and algebraic connectivity through distributed power iteration technique for a neighbouring subnetwork of the nodes 3 or a sub-network chosen by the central node 2. The distributed power iteration calculations can be associated with consensus-based iteration for the search of nodes with minimum Fiedler vector values. Those particular nodes 3 will then setup cooperation groups via the following method illustrated in figure 8.

Firstly, the nodes 3 exchange S141 information, i.e. the modified consensus matrix values and/or the differential utility matrix values in order to cooperatively calculate their Fiedler vector elements and the corresponding algebraic connectivity. This calculation is performed by the means of stochastic power iteration technique where the Rayleigh coefficient is calculated cooperatively by the means of consensus averaging. At each iteration of the stochastic power iteration, the consensus averaging is used by the nodes 3 to calculate the network wide value of the Rayleigh coefficient that will be used to update their Fiedler vector element estimate.

Secondly, clusters of nodes are formed S143. Two options are possible: either the initial clusters are formed as the trivial clusters that are including the said node 3 or the clusters are initiated as the closest *k* nodes of the node 3, *k* is being fixed by the core network or the central entity.

Thirdly, cluster representatives are calculated for the initial clusters. The cluster representative is calculated as the average Fiedler vector values of the *k* nodes in the cluster or the Fiedler vector value of the unique element in the case of trivial cluster initialisation. New nodes are added in S145 to the clusters. A new node 3 will be added to a cluster if the difference between its Fiedler vector element and the cluster representative calculated among the cluster's nodes is below a threshold.

Fourthly, the effect on the average value of the Fiedler vector by the potential addition of a new node 3 to the cluster is determined S147. If the addition of this new node would change the average Fiedler vector elements of the cluster by less than a threshold amount then the clustering diffusion is stopped S149.

Conversely if the change is above the threshold, then the method is repeated from step S145.

The advantage of this embodiment is an increased reactivity to topology change and reduced complexity over the central node. However, one drawback is the extra signalling needed for both clustering and Fiedler vector calculations.

Embodiments can be embedded in a computer program product, which comprises all the features enabling the implementation of the methods described herein, and which - when loaded in an information processing system - is able to carry out these methods. Computer program means or computer program in the present context mean any expression, in any language, code or notation, of a set of instructions intended to cause a system having an information processing capability to perform a particular function either directly or after conversion to another language. Such a computer program can be stored on a computer or machine readable medium allowing data, instructions, messages or message packets, and other machine readable information to be read from the medium. The computer or machine readable medium may include non-volatile memory, such as ROM, Flash memory, Disk drive memory, CD-ROM, and other permanent storage. Additionally, a computer or machine readable medium may include, for example, volatile storage such as RAM, buffers, cache memory, and network circuits. Furthermore, the computer or machine readable medium may comprise computer or machine readable information in a transitory state medium such as a network link and/or a network interface, including a wired network or a wireless network, that allow a device to read such computer or machine readable information.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

While there has been illustrated and described what are presently considered to be the preferred embodiments of the present invention, it will be understood by those skilled in the art that various other modifications may be made, and equivalents may be substituted, without departing from the true scope of the present invention as defined in the claims. Furthermore, an embodiment of the present invention may not include all of the features described above. Therefore, it is intended that the present invention not be limited to the particular embodiments disclosed, but that the invention include all embodiments falling within the scope of the invention as defined in the claims. A person skilled in the art will readily appreciate that various parameters disclosed in the description may be modified and that various embodiments disclosed and/or claimed may be combined without departing from the scope of the invention as defined in the claims.

**Claims**

1. A method of clustering nodes (3) in a telecommunications system, comprising a plurality of nodes (3), each of the nodes (3) being configured to communicate with a user equipment (5), the method comprising:

   determining a cooperation utility function for each of the plurality of nodes (3), the cooperation utility function comprising a function of the inverse of the transmission delay between the node (3) and a wired core network;
   forming (S101) a cooperation graph of the plurality of nodes (3) comprising information of the cooperating utility function of each of the nodes (3);
   calculating (S111) a Fiedler vector and a value of the algebraic connectivity of the cooperation graph; and
   forming (S121) the nodes (3) into a plurality of clusters on the basis of the calculated Fiedler vector and algebraic connectivity, wherein
   the size of each cluster is determined on the basis of the algebraic connectivity and the membership of a node (3) within a cluster is determined on the basis of the value of an entry in the Fiedler vector.

2. A method according to claim 1, wherein the cooperation utility function further comprises one or more of:

   i) a function of the inverse of the transmission delay between nodes (3);
   ii) a function of the current loading or resource utilisation of each node (3);
   iii) a function of the available communication bandwidth provided by each node (3); or
   iv) a function of the signal to noise and interference ratio, SINR at each node (3).

3. A method according to claim 1 or 2, wherein the cooperation utility function is a differential cooperation utility function that is calculated on the basis of the relative values of the cooperation utility function at each node (3) with respect to another node (3) in the telecommunications system.

4. A method according to any preceding claim, wherein the cooperation graph comprises links between nodes (3) and wherein two nodes (3) are linked if the value of the cooperation utility function between them is above a threshold value.

5. A method according to any of claims 1 to 3, wherein the cooperation graph comprises links between nodes (3) and wherein a particular node (3) is linked to a neighbouring node (3) if that neighbouring node (3) is among the group of nodes (3) that together have the largest values of the cooperating utility function of all of the nodes (3) that neighbour the particular node (3).

6. A method according to any preceding claim, wherein the nodes (3) are divided into two clusters, and each node (3) is a member of a first cluster if the Fiedler vector entry for that node (3) is positive.

7. A method according to any preceding claim wherein the Fiedler vector and algebraic connectivity are calculated by iteratively searching for a maximum eigenvalue and corresponding eigenvector of a consensus matrix defined by:

$$W = I - \varepsilon L - \left(\frac{1}{N}\right)\underline{1}\underline{1}^{T}$$

where:

I is the identity matrix;
N is the number of nodes in the graph;
L is the Laplacian matrix of the graph;
$\varepsilon$ is a small number that is a function of the maximum eigenvalue of the Laplacian matrix;
$\underline{1}$ is vector having entries that are all 1; and
$\underline{1}^{T}$ is the transpose of vector $\underline{1}$.

8. A method according to any preceding claim, wherein a node (3) is defined as a gateway node (3a) that connects two or more clusters of nodes (3) if it has a Fiedler vector entry that has an absolute value that is less than a threshold value.

9. A method according to claim 7, wherein the formation of a cluster of nodes (3) is terminated when the cluster size is close to the threshold:

$$|K| = \sqrt{N\frac{|L(K_1, K_2)|}{\lambda}}$$

where

$K_1$ represents a first cluster of nodes (3);
$K_2$ represents a second cluster of nodes (3);
$\lambda$ is the algebraic connectivity; and
$|L(K_1, K_2)|$ is the number of nodes with Fiedler vector entries that are within a predetermined value of zero.

10. A method according to any preceding claim, wherein each node (3) in the telecommunications system transmits its cooperation utility function to a central node (2), and wherein the central node (2) performs the calculation of the Fiedler vector and the algebraic connectivity for the cooperation graph of the telecommunications system.

11. A method according to claim 10, wherein nodes (3) in the network receive the calculated Fiedler vector and the algebraic connectivity from the central node (2) and use this information to form local cooperating sets by comparing their Fiedler vector and the algebraic connectivity values with those of neighbouring nodes (3).

12. A method according to any of claims 1 to 9 wherein the Fiedler vector and algebraic connectivity are calculated cooperatively among the nodes (3) in the telecommunications system using a distributed iterative process.

13. A node (3) for a telecommunications network comprising a plurality of such nodes (3), each of the nodes (3) being configured to communicate with a user equipment (5), the node (3) being configured to:

determine a cooperation utility function for each of the plurality of nodes (3), the cooperation utility function comprising a function of the inverse of the transmission delay between the node (3) and a wired core network;
form a cooperation graph of the nodes (3) comprising information of the cooperating utility function of each of the nodes (3);

calculate a Fiedler vector and a value of the algebraic connectivity of the cooperation graph; and

form the plurality of nodes (3) into a plurality of clusters on the basis of the calculated Fiedler vector and algebraic connectivity, wherein

the size of each cluster is determined on the basis of the algebraic connectivity and the membership of a node (3) within a cluster is determined on the basis of the value of an entry in the Fiedler vector.

14. A computer program product comprising computer readable instructions which, when run on a computer system, cause the computer system to perform the method of any of claims 1 to 12.

15. A computer readable medium comprising the computer program product according to claim 14.

**Patentansprüche**

1. Verfahren zum Clustern von Knoten (3) in einem Telekommunikationssystem, das eine Mehrzahl von Knoten (3) umfasst, wobei jeder Knoten (3) gestaltet ist, mit einer Benutzereinrichtung (5) zu kommunizieren, wobei das Verfahren Folgendes umfasst:

Bestimmen einer Kooperationsnutzenfunktion für jeden der Mehrzahl von Knoten (3), wobei die Kooperationsnutzenfunktion eine Umkehrfunktion der Übertragungsverzögerung zwischen dem Knoten (3) und einem drahtgebundenen Kernnetz umfasst;

Ausbilden (S101) eines Kooperationsgraphen der Mehrzahl von Knoten (3), der Informationen der Kooperationsnutzenfunktion jedes der Knoten (3) umfasst;

Berechnen (S111) eines Fiedlervektors und eines Werts der algebraischen Konnektivität des Kooperationsgraphen und

Ausbilden (S121) der Knoten (3) in eine Mehrzahl von Clustern auf der Grundlage des (der) berechneten Fiedlervektors und algebraischen Konnektivität, wobei

die Größe jedes Clusters auf der Grundlage der algebraischen Konnektivität bestimmt wird und die Zugehörigkeit eines Knotens (3) innerhalb eines Clusters auf der Grundlage des Werts eines Eintrags im Fiedlervektor bestimmt wird.

2. Verfahren nach Anspruch 1, wobei die Kooperationsnutzenfunktion ferner eine oder mehrere:

i) einer Umkehrfunktion der Übertragungsverzögerung zwischen Knoten (3);

ii) einer Funktion der Strombelastung oder Ressourcennutzung jedes Knotens (3);

iii) einer Funktion der durch jeden Knoten (3) bereitgestellten verfügbaren Kommunikationsbandbreite oder

iv) einer Funktion des Signal/Rausch und Interferenz-Verhältnisses (Signal to Noise und Interference Ratio, SINR) an jedem Knoten (3)

umfasst.

3. Verfahren nach Anspruch 1 oder 2, wobei die Kooperationsnutzenfunktion eine Differenzial-Kooperationsnutzenfunktion ist, die auf der Grundlage der relativen Werte der Kooperationsnutzenfunktion an jedem Knoten (3) in Bezug auf einen anderen Knoten (3) im Telekommunikationssystem berechnet wird.

4. Verfahren nach einem der vorangehenden Ansprüche, wobei der Kooperationsgraph Verbindungen zwischen Knoten (3) umfasst und wobei zwei Knoten (3) verbunden sind, wenn der Wert der Kooperationsnutzenfunktion zwischen ihnen über einem Schwellenwert liegt.

5. Verfahren nach einem der Ansprüche 1 bis 3, wobei der Kooperationsgraph Verbindungen zwischen Knoten (3) umfasst und wobei ein bestimmter Knoten (3) mit einem benachbarten Knoten (3) verbunden ist, wenn dieser benachbarte Knoten (3) aus der Gruppe von Knoten (3), die zusammen die größten Werte der Kooperationsnutzenfunktion aller zum bestimmten Knoten (3) benachbarten Knoten (3) aufweisen, stammt.

6. Verfahren nach einem der vorangehenden Ansprüche, wobei die Knoten (3) in zwei Cluster geteilt sind und jeder Knoten (3) ein Element eines ersten Clusters ist, wenn der Fiedlervektoreintrag für diesen Knoten (3) positiv ist.

7. Verfahren nach einem der vorangehenden Ansprüche, wobei der Fiedlervektor und die algebraische Konnektivität berechnet werden durch iteratives Suchen eines maximalen Eigenwerts und eines entsprechenden Eigenvektors einer Konsensmatrix, die definiert ist durch:

$$W = I - \varepsilon L - \left(\frac{1}{N}\right)\underline{1}\,\underline{1}^{T}$$

wobei:

I die Identitätsmatrix ist;
N die Anzahl der Knoten im Graph ist;
L die Laplace-Matrix des Graphen ist;
$\varepsilon$ eine kleine Zahl ist, die eine Funktion des maximalen Eigenwerts der Laplace-Matrix ist;
1 ein Vektor mit Einträgen, die alle 1 sind, ist und
$\underline{1}^{T}$ die Transponierte des Vektors $\underline{1}$ ist.

8. Verfahren nach einem der vorangehenden Ansprüche, wobei ein Knoten (3) als ein Gateway-Knoten (3a), der zwei oder mehr Cluster von Knoten (3) verbindet, definiert ist, wenn er einen Fiedlervektoreintrag mit einem absoluten Wert, der kleiner als ein Schwellenwert ist, aufweist.

9. Verfahren nach Anspruch 7, wobei die Ausbildung eines Clusters von Knoten (3) beendet wird, wenn sich die Clustergröße dem Schwellenwert nähert:

$$|K| = \sqrt{N\frac{|L(K_{1},K_{2})|}{\lambda}}$$

wobei

$K_1$ einen ersten Cluster von Knoten (3) darstellt;
$K_2$ einen zweiten Cluster von Knoten (3) darstellt;
$\lambda$ die algebraische Konnektivität ist und
$|L(K_1, K_2)|$ die Anzahl von Knoten mit Fiedlervektoreinträgen, die innerhalb eines vorbestimmten Werts von Null liegen, ist.

10. Verfahren nach einem der vorangehenden Ansprüche, wobei jeder Knoten (3) im Telekommunikationssystem seine Kooperationsnutzenfunktion an einen zentralen Knoten (2) überträgt und wobei der zentrale Knoten (2) die Berechnung des Fiedlervektors und der algebraischen Konnektivität für den Kooperationsgraphen des Telekommunikationssystems ausführt.

11. Verfahren nach Anspruch 10, wobei Knoten (3) im Netz den berechneten Fiedlervektor und die berechnete algebraische Konnektivität vom zentralen Knoten (2) empfangen und diese Informationen nutzen, um lokale Vergleichssätze auszubilden, indem sie ihre(n) Fiedlervektor und algebraischen Konnektivitätswerte mit denen benachbarter Knoten (3) vergleichen.

12. Verfahren nach einem der Ansprüche 1 bis 9, wobei der Fiedlervektor und die algebraische Konnektivität kooperativ zwischen den Knoten (3) im Telekommunikationssystem unter Verwendung eines verteilten iterativen Prozesses berechnet werden.

13. Knoten (3) für ein Telekommunikationsnetz, umfassend eine Mehrzahl solcher Knoten (3), wobei jeder Knoten (3) gestaltet ist, mit einer Benutzereinrichtung (5) zu kommunizieren, wobei der Knoten (3) gestaltet ist:

eine Kooperationsnutzenfunktion für jeden der Mehrzahl von Knoten (3) zu bestimmen, wobei die Kooperationsnutzenfunktion eine Umkehrfunktion der Übertragungsverzögerung zwischen dem Knoten (3) und einem drahtgebundenen Kernnetz umfasst;

einen Kooperationsgraphen der Knoten (3), der Informationen der Kooperationsnutzenfunktion jedes der Knoten (3) umfasst, auszubilden;

einen Fiedlervektor und einen Wert der algebraischen Konnektivität des Kooperationsgraphen zu berechnen und die Mehrzahl von Knoten (3) in eine Mehrzahl von Clustern auf der Grundlage des (der) berechneten Fiedlervektors und algebraischen Konnektivität auszubilden, wobei die Größe jedes Clusters auf der Grundlage der algebraischen Konnektivität bestimmt wird und die Zugehörigkeit eines Knotens (3) innerhalb eines Clusters auf der Grundlage des Werts eines Eintrags im Fiedlervektor bestimmt wird.

14. Computerprogrammprodukt, umfassend computerlesbare Befehle, die, wenn sie auf einem Computersystem ausgeführt werden, das Computersystem dazu veranlassen, das Verfahren nach einem der Ansprüche 1 bis 12 auszuführen.

15. Computerlesbares Medium, umfassend das Computerprogrammprodukt nach Anspruch 14.

**Revendications**

1. Procédé de mise en grappe de noeuds (3) dans un système de télécommunication, comprenant une pluralité de noeuds (3), chacun des noeuds (3) étant configuré pour communiquer avec un équipement utilisateur (5), le procédé comprenant :

la détermination d'une fonction d'utilité de coopération pour chacun de la pluralité de noeuds (3), la fonction d'utilité de coopération comprenant une fonction de l'inverse du retard de transmission entre le noeud (3) et un réseau d'infrastructure câblé ;

la formation (S101) d'un graphe de coopération de la pluralité de noeuds (3) comprenant des informations de la fonction d'utilité de coopération de chacun des noeuds (3) ;

le calcul (S111) d'un vecteur de Fiedler et d'une valeur de la connectivité algébrique du graphe de coopération ; et

la formation (S121) des noeuds (3) en une pluralité de grappes sur la base du vecteur de Fiedler et de la connectivité algébrique calculés, dans lequel la taille de chaque grappe est déterminée sur la base de la connectivité algébrique et

l'appartenance d'un noeud (3) à l'intérieur d'une grappe est déterminée sur la base de la valeur d'une entrée dans le vecteur de Fiedler.

2. Procédé selon la revendication 1, dans lequel la fonction d'utilité de coopération comprend en outre une ou plusieurs parmi :

i) la fonction de l'inverse du retard de transmission entre noeuds (3) ;

ii) une fonction de la charge ou de l'utilisation de ressource actuelle de chaque noeud (3) ;

iii) une fonction de la largeur de bande de communication disponible fournie par chaque noeud (3) ; ou

iv) une fonction du rapport signal-bruit et brouillage, SINR, à chaque noeud (3).

3. Procédé selon la revendication 1 ou 2, dans lequel la fonction d'utilité de coopération est une fonction d'utilité de coopération différentielle qui est calculée sur la base des valeurs relatives de la fonction d'utilité de coopération à chaque noeud (3) par rapport à un autre noeud (3) dans le système de télécommunication.

4. Procédé selon une quelconque revendication précédente, dans lequel le graphe de coopération comprend des liaisons entre des noeuds (3) et dans lequel deux noeuds (3) sont liés si la valeur de la fonction d'utilité de coopération entre eux est supérieure à une valeur de seuil.

5. Procédé selon l'une quelconque des revendications 1 à 3, dans lequel le graphe de coopération comprend des liaisons entre des noeuds (3) et dans lequel un noeud particulier (3) est lié à un noeud voisin (3) si ce noeud voisin (3) est parmi le groupe de noeuds (3) qui possèdent ensemble les valeurs les plus grandes de la fonction d'utilité de coopération de tous les noeuds (3) qui avoisinent le noeud particulier (3).

6. Procédé selon une quelconque revendication précédente, dans lequel les noeuds (3) sont divisés en deux grappes, et chaque noeud (3) est un membre d'une première grappe si l'entrée de vecteur de Fiedler pour ce noeud (3) est positive.

7. Procédé selon une quelconque revendication précédente, dans lequel le vecteur de Fiedler et la connectivité algébrique sont calculés en recherchant de façon itérative une valeur propre maximum et un vecteur propre correspondant d'une matrice de consensus définie par :

$$W = I - \varepsilon L - \left(\frac{1}{N}\right)\underline{1}\,\underline{1}^{T}$$

où :

I est la matrice d'identité ;
N est le nombre de noeuds dans le graphe ;
L est la matrice laplacienne du graphe ;
$\varepsilon$ est un petit nombre qui est une fonction de la valeur propre maximum de la matrice laplacienne ;
$\underline{1}$ est un vecteur possédant des entrées qui sont toutes 1 ; et
$\underline{1}^{T}$ est la transposée du vecteur $\underline{1}$.

8. Procédé selon une quelconque revendication précédente, dans lequel un noeud (3) est défini en tant que noeud passerelle (3a) qui connecte deux, ou plus, grappes de noeuds (3) s'il possède une entrée de vecteur de Fiedler qui possède une valeur absolue qui est inférieure à une valeur de seuil.

9. Procédé selon la revendication 7, dans lequel la formation d'une grappe de noeuds (3) est terminée lorsque la taille de grappe est proche du seuil :

$$|K| = \sqrt{N\frac{|L(K_{1},K_{2})|}{\lambda}}$$

où

$K_1$ représente une première grappe de noeuds (3) ;
$K_2$ représente une seconde grappe de noeuds (3) ;
$\lambda$ est la connectivité algébrique ; et
$|L(K_1,K_2)|$ est le nombre de noeuds avec des entrées de vecteur de Fiedler qui sont au sein d'une valeur prédéterminée de zéro.

10. Procédé selon une quelconque revendication précédente, dans lequel chaque noeud (3) dans le système de télécommunication transmet sa fonction d'utilité de coopération à un noeud central (2), et dans lequel le noeud central (2) réalise le calcul du vecteur de Fiedler et de la connectivité algébrique pour le graphe de coopération du système de télécommunication.

11. Procédé selon la revendication 10, dans lequel des noeuds (3) dans le réseau reçoivent le vecteur de Fiedler et la connectivité algébrique calculés à partir du noeud central (2) et utilisent ces informations pour former des ensembles coopératifs locaux en comparant leur vecteur de Fiedler et les valeurs de connectivité algébrique à ceux de noeuds voisins (3).

12. Procédé selon l'une quelconque des revendications 1 à 9, dans lequel le vecteur de Fiedler et la connectivité algébrique sont calculés de façon coopérative parmi les noeuds (3) dans le système de télécommunication en utilisant un processus itératif distribué.

13. Noeud (3) pour un réseau de télécommunication comprenant une pluralité de tels noeuds (3), chacun des noeuds (3) étant configuré pour communiquer avec un équipement utilisateur (5), le noeud (3) étant configuré pour :

déterminer une fonction d'utilité de coopération pour chacun de la pluralité de noeuds (3), la fonction d'utilité de coopération comprenant une fonction de l'inverse du retard de transmission entre le noeud (3) et un réseau d'infrastructure câblé ;

former un graphe de coopération des noeuds (3) comprenant des informations de la fonction d'utilité de coopération de chacun des noeuds (3) ;

calculer un vecteur de Fiedler et une valeur de la connectivité algébrique du graphe de coopération ; et

former la pluralité de noeuds (3) en une pluralité de grappes sur la base du vecteur de Fiedler et de la connectivité algébrique calculés, dans lequel

la taille de chaque grappe est déterminée sur la base de la connectivité algébrique et l'appartenance d'un noeud (3) à l'intérieur d'une grappe est déterminée sur la base de la valeur d'une entrée dans le vecteur de Fiedler.

14. Produit programme d'ordinateur, comprenant des instructions lisibles par ordinateur qui, lorsqu'elles sont exécutées sur un système d'ordinateur, font en sorte que le système d'ordinateur réalise le procédé selon l'une quelconque des revendications 1 à 12.

15. Support lisible par ordinateur, comprenant le produit programme d'ordinateur selon la revendication 14.

**FIG. 1**

FIG. 2

Evaluation/calculation of the cooperation Graph — S101

Calculation of the algebraic connectivity and Fiedler vector — S111

Using Fiedler vector and algebraic connectivity for cooperation clusters formation — S121

# FIG. 3a

S103

Associate graph nodes with network nodes

S105 — Evaluate the cooperation utility functions of the nodes

Calculate the differential cooperation utility functions for the nodes

S107

Form the cooperation graph — S09

S101

## FIG. 3b

S113

Initialise the state vector and variable y

Perform a power iteration — S115

Update state vector and variable y — S117

Test for convergence — S119

S120

Output values for Fiedler vector and algebraic connectivity

S111

## FIG. 3c

FIG. 4a

Cluster 1                              Cluster 2

FIG. 4b

FIG. 5

FIG. 6

S131

Gateway nodes set up clusters with neighbouring nodes

S133

Calculate the average value of the Fiedler vector for each cluster

S134

Add nodes to the cluster that have Fiedler vector value that is close to the average

Calculate the average Fiedler vector value variation in the network. Below threshold?

S135

Y    N

Stop    S137

## FIG. 7

S141

Nodes 3 exchange their Fiedler vector elements and update them to the average

Form clusters of nodes 3    S143

S145    Add new nodes to the clusters

Calculate the change in the average Fiedler vector value on the potential addition of a new node 3 to the cluster. Below threshold?

S147

Y    N

Stop    S149

## FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Seeing the bigger picture: How nodes can learn their place within a complex ad hoc network topology. **BERTRAND A et al.** IEEE Signal Processing Magazine. IEEE Service Center, 01 May 2013, vol. 30, 71-82

- Distributed estimation and control of algebraic connectivity over random graphs. **PAOLO et al.** IEEE transactions on signal processing. IEEE Service Center, 01 November 2014, vol. 62, 5615-5628